# EUROPÄISCHE PATENTANMELDUNG

(11) **EP 1 953 032 A2**
(43) Veröffentlichungstag der Anmeldung: **06.08.2008**
(21) Anmeldenummer: 08100990.4
(22) Anmeldetag: 28.01.2008
(51) Int. Cl.: B60N 2/02, B60R 16/02

(54) **System zur Messung und Aufzeichnung von Bewegungen in einem Arbeitsfahrzeug**

(30) Priorität: 02.02.2007 DE 102007006046
(71) Anmelder: Deere & Company, Moline, IL 61265-8098 (US)
(72) Erfinder: Scheff, Udo, 67549, Worms (DE); Reinards, Marco, 54608, Bleialf (DE)
(74) Vertreter: Holst, Sönke

(57) **Zusammenfassung**

Es wird ein System (10) zur Messung und Aufzeichnung von Bewegungen in einem Arbeitsfahrzeug (48), insbesondere Vibrationen, vorgeschlagen. Das System (10) umfasst ein Gerät (12) mit einem Gehäuse (14), einen Prozessor zur Verarbeitung von Daten, einen Speicher zur Speicherung von Daten, wenigstens eine Ausgabeeinrichtung zur Ausgabe von Daten, wenigstens eine Eingabeeinrichtung zur Eingabe von Daten und einen Sensor (16) zur Generierung von Bewegungssignalen, wobei die von dem Sensor (16) generierten Signale zur Messung und Aufzeichnung von Bewegungen in Form elektronischer und von dem Prozessor verarbeitbarer Bewegungsdaten herangezogen werden. Um verschiedene Nachteile von im Stand der Technik bekannten Systemen zu überwinden wird vorgeschlagen, den Sensor (16) an oder in dem Gehäuse (14) anzuordnen.

## Beschreibung

Die Erfindung betrifft ein System zur Messung und Aufzeichnung von Bewegungen in einem Arbeitsfahrzeug, insbesondere Vibrationen. Das System umfasst ein Gerät mit einem Gehäuse, einen Prozessor zur Verarbeitung von Daten, einen Speicher zur Speicherung von Daten, wenigstens eine Ausgabeeinrichtung zur Ausgabe von Daten, wenigstens eine Eingabeeinrichtung zur Eingabe von Daten und einen Sensor zur Generierung von Bewegungssignalen, wobei die von dem Sensor generierten Signale zur Messung und Aufzeichnung von Bewegungen in Form elektronischer und von dem Prozessor verarbeitbarer Bewegungsdaten herangezogen werden. Ferner umfasst die Erfindung ein Arbeitsfahrzeug, in dem ein derartiges System vorgesehen ist.

Bedienpersonen von Arbeitsfahrzeugen, wie z. B. landwirtschaftlichen Fahrzeugen, insbesondere Traktoren, oder Baumaschinen, sind in signifikanter Weise Vibrationen ausgesetzt, die auf die Arme und die Hände oder auf den gesamten Körper der Bedienperson einwirken können. In der Vergangenheit wurden Anstrengungen unternommen Federungssysteme zu entwickeln, wie z.B. gefederte Fahrzeugsitze, Fahrzeugachsen oder Fahrzeugkabinen, um die Einwirkung von Bewegungen des Fahrzeugs bzw. von Vibrationen des Fahrzeugs auf die Bedienperson zu reduzieren bzw. zu dämpfen, wobei der Fahrzeugssitz als direkte Verbindung zwischen Bedienperson und Fahrzeug, eine Hauptfederungs- bzw. Hauptdämpfungskomponente darstellt.

In Anbetracht dessen, dass eine Bedienperson beim Betreiben landwirtschaftlicher Fahrzeuge oder Arbeitsmaschinen Vibrationen ausgesetzt wird, wurden Standards geschaffen, z.B. ISO 7096, welche das Dämpfungsvermögen des Fahrzeugsitzes beschreiben. Ferner wurden verschiedene Standards geschaffen, um die Vibrationsbelastung einer sich auf einem Fahrzeugssitz einer landwirtschaftlichen Maschine befindlichen Bedienperson zu messen und zu bewerten (VDI 2057, ISO 2631, EN 14253). Der Hintergrund derartiger Standards ist die Entwicklung einer einheitlichen Methode zur Bestimmung der Belastung einer Bedienperson durch Ganzkörpervibrationen, wobei Mittel zur Messung von Fahrzeugsitzbeschleunigungen zu Grunde gelegt werden.

Ein zunehmendes Gesundheitsbewusstsein bezüglich bestehender Risiken durch Ganzkörpervibrationsbelastungen führte zu der Einführung einer gesetzlichen Beschränkung der Tagesdosis an Ganzkörpervibrationen. Die "Physical Agents Directive" (PAD) der Europäischen Union (2002/44/EC) definiert zwei Belastungslevel: Einen Betriebslevel und einen Grenzlevel. Die PAD weist ferner aus, dass die Verantwortung für die Bewertung des Gesundheitsrisikos, die Beseitigung oder Reduzierung der Belastungen und die gesundheitsrelevante Überwachung des Arbeitsplatzes einer Bedienperson beim Arbeitgeber liegen.

In der Vergangenheit wurden derartig geforderte Maßnahmen durch den Einsatz von laborartigen Einrichtungen bzw. Laborausrüstungen zur Messung, Aufzeichnung und Speicherung entsprechender Daten durchgeführt. Derartige Ausrüstungen sind platzraubend und weisen separat angeordnete Komponenten zur Sensorik, Datenaufnahme, Datenverarbeitung und Datenaufzeichnung (Datenspeicherung) auf. Moderne Messeinrichtungen umfassen Geräte, bei denen die Komponenten zur Datenaufnahme, Datenverarbeitung und Datenaufzeichnung in einem Bauteil integriert sind (z.B. "Industrial Hygiene Vibration Monitor, Model IHVM 100" von Larson Davis oder "Human Vibration Analyzer - Type 4447" von Brüel & Kjaer).

Nachteilig wirkt sich dabei aus, dass die Bedienung und Einstellung dieser Geräte sehr kompliziert ist und technische Kenntnisse erfordert. Ferner werden Sitzauflagesensoren verwandt, die für die Bedienperson unbequem und daher für den täglichen Gebrauch unpraktikabel sind. Des Weiteren sind die Geräte zu platzraubend, um an dem Fahrzeug zu Aufzeichnungszwecken verbleiben zu können. Außerdem sind diese Geräte für unterschiedliche Nutzer und Bedienpersonen nur schwierig konfigurierbar, wobei die Systeme nur sehr begrenzte Möglichkeiten zur Datenübertragung aufweisen. Ferner ist eine spezielle Ausrüstung zur Kalibrierung dieser Systeme erforderlich. Nachteilig ist auch das Erfordernis von Verkabelungen des Sensors (Sitzauflagesensor) mit dem Gerät.

In der EP 1481841 A2 wird ein weiteres System offenbart, welches zur Messung und Aufzeichnung von Vibrationen einsetzbar ist. Das System ermöglicht die Aufzeichnung von Vibrationsbelastungen gemäß der PAD Richtlinien. Das System umfasst einen mit einem Sensor bestückten Fahrersitz, sowie eine Datenverarbeitungs- und Datenaufzeichnungseinrichtung, die in einem vom Fahrersitz separierten Gerät untergebracht ist. Benutzeridentifikationen sowie Datenübertragungen können durch zusätzliche Systeme vorgenommen werden. Das hier offenbarte System weist somit ebenfalls einige der oben genannten Nachteile auf.

Die der Erfindung zu Grunde liegende Aufgabe wird darin gesehen, ein Gerät der eingangs genannten Art zu schaffen, durch welches die vorgenannten Probleme überwunden werden.

Die Aufgabe wird erfindungsgemäß durch die Lehre des Patentanspruchs 1 und 12 gelöst. Weitere vorteilhafte Ausgestaltungen und Weiterbildungen der Erfindung gehen aus den Unteransprüchen hervor.

Erfindungsgemäß wird ein System der eingangs genannten Art derart ausgebildet, dass der Sensor an oder in dem Gehäuse positioniert ist. Dadurch, dass der Sensor an oder in dem Gehäuse positioniert ist, kann ein kompaktes System realisiert werden, welches alle für die Durchführung von Messungen und Aufzeichnungen von Vibrationen bzw. Bewegungen benötigten Komponenten umfasst. Vorzugsweise sind dabei alle Komponenten, also der Prozessor, der Speicher, die wenigstens eine Ausgabeeinrichtung, die wenigstens eine Eingabeeinrichtung sowie der Sensor in oder an dem Gehäuse unter- bzw. angebracht. Störende Verkabelungen entfallen, wodurch die Störanfälligkeit eines derartigen Systems auf ein Minimum reduziert ist und Installationsfehler durch die Bedienperson vermieden werden. Ferner können auch Komponenten, wie Signalfilter oder Signalverstärker, sowie weitere Komponenten zur Signalverarbeitung vorgesehen sein, die in dem Gehäuse untergebracht sind. Ein Benutzer erhält dadurch ein System welches einfach transportierbar, bedien- und gebrauchsfertig positionierbar bzw. installierbar ist. Ferner ist durch eine derartige Konfiguration der Komponenten eine Portabilität gewährleistet, so dass das System personenbezogen oder fahrzeugbezogen einsetzbar ist, ohne komplizierte und aufwändige Installationsarbeiten durchführen zu müssen. Ein erfindungsgemäßes System wird somit den Erfordernissen der eingangs erwähnten "Physical Agents Directive 2002/44/EC" gerecht und kann auf besonders vorteilhafte Weise zu personen- und/oder fahrzeugbezogenen Vibrationsmessungen herangezogen werden.

Der Sensor kann beispielsweise als Sensorchip ausgebildet sein, der vorzugsweise über eine Einsteckkarte an oder in dem Gehäuse angeordnet ist. Derartige Sensoren sind bekannt und werden beispielsweise in Videokameras eingesetzt, um Bewegungen des Kameragehäuses zu kompensieren.

Vorzugsweise umfasst das Gerät bzw. das Gehäuse eine Anzeigeeinrichtung. Die Anzeigeeinrichtung dient beispielsweise zur Wiedergabe und/oder Anzeige von Eingabe- und Ausgabedaten, wobei die Anzeigeeinrichtung in Form eines herkömmlichen Computerdisplays ausgebildet sein kann.

Eine unabhängige Stromversorgung, vorzugsweise eine Batterie oder ein Akku, ermöglicht einen vom Fahrzeug unabhängigen Betrieb des Gerätes.

Über eine Stromzuführeinrichtung kann eine als Akku ausgebildete Stromversorgung aufgeladen werden.

Über eine Eingabeeinrichtung können relevante Daten von dem Benutzer oder der Bedienperson in das System eingegeben werden, wobei die Eingabeeinrichtung als Tastatur mit einer oder mehreren Tasten versehen sein kann. Die Tastatur kann ebenfalls als Touch-Screen auf der Anzeigeeinrichtung ausgebildet sein.

Ferner ist es möglich eine als Teil einer Steckverbindung, insbesondere als Schnittstelle ausgebildete Eingabeeinrichtung vorzusehen, wobei hier Schnittstellen für Datenkabel und/oder Einsteckkarten vorgesehen sein können. Die Eingabeeinrichtung kann ferner auch als Leselaufwerk ausgebildet sein, mit welchem die Eingabe von Daten beispielsweise durch lesen externer Datenträger wie CD's oder DVD's erfolgen kann. Es ist auch denkbar, die Eingabeeinrichtung derart auszubilden, dass Eingabedaten über eine Sende- und Empfangseinrichtung (z.B. Mobilfunkeinrichtung) in das System eingespeist werden können.

Des Weiteren ist es möglich eine als Teil einer Steckverbindung, insbesondere als Schnittstelle ausgebildete Ausgabeeinrichtung vorzusehen, wobei hier Schnittstellen für Datenkabel und/oder Einsteckkarten vorgesehen sein können. Die Ausgabeeinrichtung kann ferner auch als Schreiblaufwerk ausgebildet sein, wobei die Ausgabe von Daten beispielsweise durch Speicherung auf externe Datenträger wie CD's oder DVD's erfolgen kann. Hierbei ist es ebenfalls denkbar, die Ausgabeeinrichtung derart auszubilden, dass Ausgabedaten über eine Sende- und Empfangseinrichtung (z.B. Mobilfunkeinrichtung) aus dem System versendet werden können.

In einem bevorzugten Ausführungsbeispiel umfasst das System wenigstens eine Konsole, an die das Gehäuse des Gerätes befestigbar ist. Die Konsole kann dabei als Halterung beliebiger Art ausgebildet sein, wobei Mittel vorgesehen sind, mit denen das Gehäuse und die Konsole zur Befestigung des Gehäuses verbunden werden können.

Vorzugsweise ist das Gehäuse des Geräts als Einschubmodul und die Konsole als Aufnahmefach zur Aufnahme des Gehäuses ausgebildet. Dadurch wird es möglich, auf einfache, unkomplizierte und schnelle Weise das Gerät zu installieren bzw. an oder in der Konsole sicher zu positionieren. Das Gerät kann in Form einer Kassette (Einschubmodul) in ein entsprechend der Kassette ausgeformtes Schubfach (Konsole) geschoben werden, wobei das Gerät über die Einschubverbindung zwischen Gehäuse und Konsole lösbar mit der Konsole verbunden wird.

Durch den Einschubvorgang können beispielsweise alle erforderlichen Steckverbindungen zwischen Gerät und Konsole automatisch hergestellt werden. So kann die Konsole wenigstens eine als Teil einer Steckverbindung ausgebildete Ausgabeeinrichtung und wenigstens eine als Teil einer Steckverbindung ausgebildete Eingabeeinrichtung aufweisen, welche mit einer als Teil einer Steckverbindung ausgebildete Eingabeeinrichtung bzw. Ausgabeeinrichtung des Gerätes verbindbar ist. Die entsprechenden Teile der Steckverbindungen können während des Einschubvorgangs durch diesen automatisch, oder auch separat nachdem der Einschubvorgang vorgenommen wurde, miteinander verbunden werden.

Ferner kann die Konsole eine mit dem Gerät verbindbare Stromversorgungseinrichtung aufweisen, so dass das Gerät bzw. eine Batterie oder ein Akku des Gerätes, während des Betriebes bzw. während es sich in der Konsole befindet, aufladbar ist.

Das System eignet sich besonders für den Einsatz an landwirtschaftlichen Fahrzeugen oder anderen Arbeitsfahrzeugen, wie Laderfahrzeugen, Baumaschinen oder Forstmaschinen. Das System kann vorzugsweise in dem entsprechenden Fahrzeug platziert werden und zur Messung und Aufzeichnung von Vibrationsbewegungen herangezogen werden, denen eine Komponente am Fahrzeug oder eine Bedienperson des Fahrzeugs ausgesetzt ist.

Erfindungsgemäß ist ferner ein Arbeitsfahrzeug, insbesondere ein landwirtschaftliches Fahrzeug vorgesehen, welches eine Konsole gemäß obiger Ausführungen aufweist. Das Fahrzeug kann damit für ein oben erwähntes System vorgerüstet werden, so dass das Gerät eines derartigen Systems nachrüstbar ist oder mehrere Fahrzeuge mit ein und demselben Gerät gemäß einem oben erwähnten System bestückt werden können. Es können somit mehrere Konsolen vorgesehen sein, die jeweils einem bestimmten Fahrzeug zugehörig sind bzw. in unterschiedlichen Fahrzeugen platziert werden und mit demselben Gerät des Systems bestückbar sind. Die Konsole ist dabei an dem jeweiligen Fahrzeug befestigt. Das Arbeitsfahrzeug kann dabei als landwirtschaftlicher Schlepper oder als beliebig anderes landwirtschaftliches Fahrzeug, beispielsweise als Erntemaschine oder Feldspritze ausgebildet sein. Ferner sollen auch Arbeitsfahrzeuge in Form von Laderfahrzeugen, wie Teleskoplader oder Radlader oder Baufahrzeuge berücksichtigt werden. Die Konsole ist dazu vorgesehen, dass das Fahrzeug auf besonders einfache und unkomplizierte Weise und mit minimalem Installationsaufwand mit dem oben beschriebenen Gerät zur Messung und Aufzeichnung von Vibrationen bestückbar ist.

Die Konsole ist vorzugsweise mit einer elektronischen Steuereinheit des Fahrzeugs verbunden, so dass über die an der Konsole und dem Gerät vorsehbaren Schnittstellen ein Datentransfer zwischen der elektronischen Steuereinheit des Fahrzeugs und dem Gerät herstellbar ist, so dass auch über eine mit der elektronischen Steuerung des Fahrzeugs verbundene Eingabe- und/oder Ausgabeeinheit ein Datentransfer zwischen Gerät und Fahrzeug hinsichtlich Eingabe- bzw. Ausgabedaten ermöglicht wird.

Die Konsole ist zur Stromversorgung des Systems vorzugsweise mit einer Stromquelle am Fahrzeug verbunden, so dass eine stetige Stromversorgung zum Betreiben des Geräts aber auch zum Aufladen einer am Gerät des Systems vorhandenen Batterie bzw. eines Akkus durch Anschließen des Geräts an die Konsole bzw. Verbinden des Geräts mit der Konsole (durch Einstecken, Einschieben oder "Andocken" etc.) ermöglicht wird.

Die Konsole ist vorzugsweise in der Kabine bzw. an der Bedienerplattform untergebracht, kann jedoch auch an anderen Stellen des Fahrzeugs angeordnet sein. Zweckmäßiger Weise ist zur Messung und Aufzeichnung von Vibrationsbewegungen, die sich auf die Bedienperson auswirken eine Position nahe der Bedienperson von Vorteil.

In einer bevorzugten Ausgestaltung der Erfindung ist die Konsole an einem Fahrzeugsitz des Fahrzeugs angeordnet, um einen Messort möglichst nahe des Körpers der Bedienperson zu erzielen, ohne jedoch die Bedienperson ergonomisch nachteilig zu beeinflussen. Die Konsole kann dabei in den Sitz oder in den Sitzsockel integriert werden, so dass keine platzraubenden Maßnahmen erforderlich sind. Denkbar sind aber auch Anordnungen am Steuerpult bzw. Bedienpult bzw. an der Steuerkonsole des Fahrzeugs oder eine Anordnung im Fußbodenbereich oder an den Kabinenwänden.

Anhand der Zeichnungen, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen schematische Aufbau eines erfindungsgemäßen Systems,
- Fig. 2: eine vergrößerte schematische Ansicht eines Geräts des Systems aus Fig. 1 und
- Fig. 3: eine schematische Seitenansicht eines landwirtschaftlichen Fahrzeugs mit einem System gemäß Fig. 1.

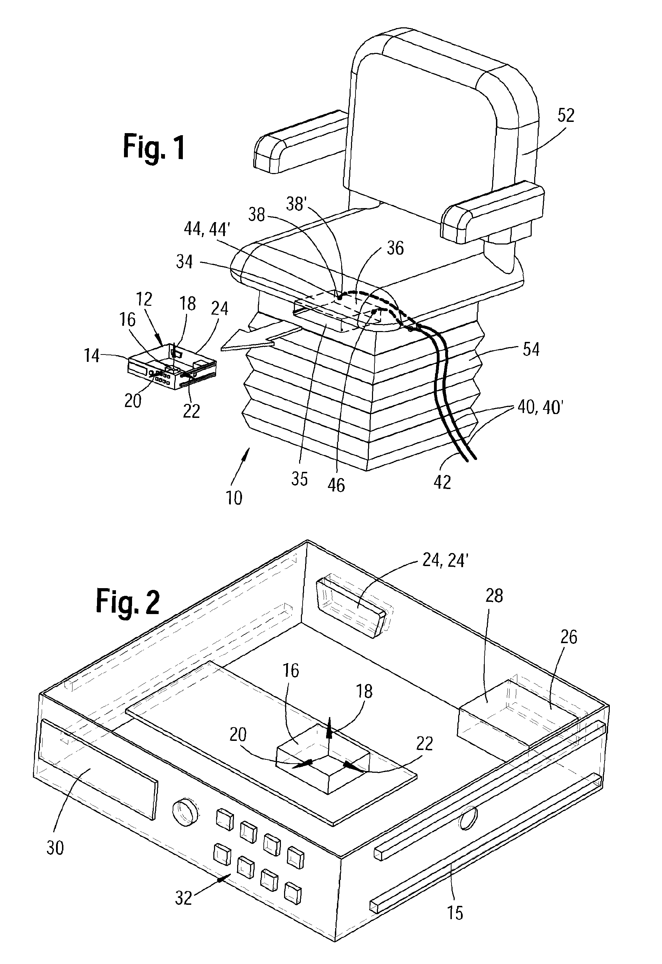

In Figur 1 ist ein erfindungsgemäßes System 10 schematisch dargestellt. Das System 10 weist ein Gerät 12 auf, welches ein Gehäuse 14 umfasst.

Das Gerät 12 bzw. das Gehäuse 14 ist vergrößert in Figur 2 dargestellt. In dem Gehäuse 14 ist ein Bewegungssensor 16 untergebracht, sowie gegebenenfalls ein erforderlicher Signalverstärker (nicht gezeigt), sowie ein Signalwandler (nicht gezeigt). In dem Gehäuse 14 ist ferner ein Signal- und Datenprozessor sowie ein zur Speicherung der Signaldaten erforderlicher Speicher (beides nicht gezeigt) untergebracht. Ferner ist der Speicher mit einer entsprechenden Software versehen, welche die Prozessabläufe zur Messung und Aufzeichnung der von dem Sensor 16 generierten Signale in Verbindung mit dem Signal- und Datenprozessor steuert. Des Weiteren können in dem Gehäuse 14 verschiedene analoge und/oder digitale Signalfilter zur Datenerfassung und Datenaufbereitung vorgesehen sein.

Der Bewegungssensor 16 ist vorzugsweise als Beschleunigungssensor oder Dreiachsen-Accelerometer ausgebildet und ermöglicht die Erfassung von Bewegungen bzw. Beschleunigungen in drei zueinander senkrecht stehenden Raumachsen 18, 20, 22. Es sind jedoch auch andere Arten von Bewegungssensoren einsetzbar, durch welche Bewegungen richtungsabhängig erfasst und aufgezeichnet werden können. Vorzugsweise ist der Bewegungssensor 16 als Sensorchip oder als äquivalentes Bauteil ausgebildet und auf einer im Gehäuse 14 platzierten Platine angeordnet oder anderweitig in einem elektronischen Schaltkreis im Gehäuse 14 intergriert. Entsprechend der erfassten Bewegungen bzw. Beschleunigungen generiert der Sensor 16 auf die entsprechenden Raumachsen 18, 20, 22 bezogene Bewegungs- bzw. Beschleunigungssignale, die von dem Signal- und Datenprozessor verarbeitet werden können.

Das Gerät 12 wird nach außen hin durch sein Gehäuse 14 begrenzt, wobei das Gehäuse 14 zur Dateneingabe bzw. zum Dateneinlesen entsprechende Steckverbindungsteile 24, die als parallele und/oder serielle und/oder USB Schnittstellen ausgebildet sind, umfasst. Entsprechende als Schnittstellen ausgebildete Steckverbindungsteile 24' sind auch für die Datenausgabe bzw. zum Datenauslesen vorgesehen. Ferner können die Steckverbindungsteile 24, 24' auch als CAN-Bus kompatible Schnittstellen ausgebildet sein.

An dem Gehäuse 14 ist ferner ein weiterer Steckverbindungsteil 26 vorgesehen, der zur Stromversorgung des Gerätes 12 dient. Das Gerät umfasst ferner eine integrierte unabhängige und aufladbare Stromversorgung 28 in Form eines aufladbaren Akkus, der über den Steckverbindungsteil 26 aufladbar ist. Damit ist das Gerät 12 auch ohne externe Stromversorgung, die über den Steckverbindungsteil 26 installierbar ist, betreibbar.

Das Gerät 12 weist ferner eine an dem Gehäuse 14 ausgebildete Anzeigeeinrichtung 30 auf, die beispielsweise als herkömmliches LCD-Display ausgebildet sein kann. Des Weiteren ist eine Eingabeeinrichtung 32 in Form einer Tastatur vorgesehen.

Das System 10 weist ferner eine Konsole 34 auf, die zur lösbaren Aufnahme des Gehäuses 14 dient. Die Konsole ist als kastenförmiges, einen Hohlraum bildendes Aufnahmefach 35 ausgebildet und weist an einer Rückwand 36 auf der Außenseite Anschlüsse 38, 38', 39 auf, über welche die Konsole 34 mit elektronischen Datenübertragungsleitungen 40, 40' und Stromversorgungsleitungen 42 verbunden ist, wobei die Datenübertragungsleitung für einen Datentransfer zur Konsole 34 mit 40 und die Datenübertragungsleitung für einen Datentransfer von der Konsole 34 kommend mit 40' bezeichnet ist, wobei der Datentransfer bidirektional auch in einer Leitung erfolgen kann. Die Vorderseite der Konsole 34 ist zur Aufnahme des Gehäuses 14 geöffnet. An der Rückwand 36 der Konsole 34 sind auf der Innenseite Steckverbindungsteile 44, 44', 46 vorgesehen, die derart ausgebildet sind, dass eine Steckverbindung mit den Steckverbindungsteilen 24, 24', 26 herstellbar ist. Die Steckverbindungsteile 44, 44', 46 sind gleichzeitig mit den auf der Außenseite der Rückwand 36 vorgesehenen Anschlüssen 38, 38', 39 verbunden.

Das Gehäuse 14 ist als kastenförmiges Einschubmodul 15 ausgebildet, dessen Größe und Form auf den Hohlraum der Konsole 34 abgestimmt ist, so dass das Gehäuse 14 durch einen Einsteck- oder Einschubvorgang in die Konsole 34 von dieser aufgenommen und fixiert werden kann. Durch Einführen bzw. Einstecken oder Einschieben des Gehäuses 14 in die Konsole 34 werden automatisch die vorhandenen Steckverbindungsteile 24, 24', 26 mit den Steckverbindungsteilen 44, 44', 46 verbunden so dass eine Verbindung zwischen dem Gerät 12 bzw. dem Gehäuse 14 und den Daten- und Stromversorgungsleitungen 40, 40', 42 hergestellt wird.

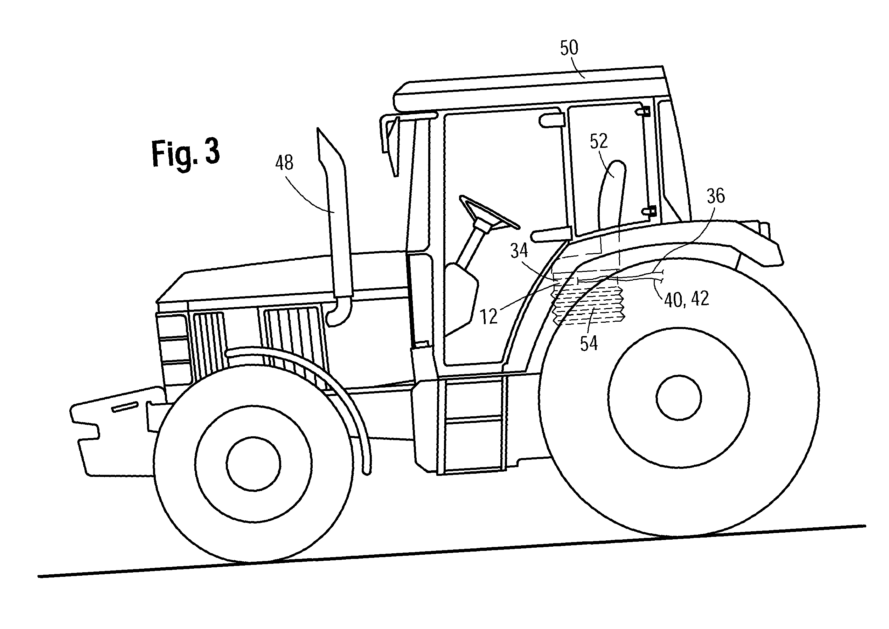

In einem Anwendungsbeispiel, welches in Figur 3 dargestellt ist, ist das System 10 in einem Arbeitsfahrzeug 48 installiert. In dem dargstellten Beispiel ist das Arbeitsfahrzeug 48 als landwirtschaftlicher Schlepper ausgebildet, wobei das System 10 auch an jedem beliebig anderen Arbeitsfahrzeug 48 integrierbar ist. Das Arbeitsfahrzeug 48 weist eine Kabine 50 auf, in der ein Fahrzeugsitz 52 angeordnet ist. Bei Betreiben des Fahrzeugs 48 werden Bewegungen bzw. Vibrationen ausgelöst, die auf den Fahrzeugsitz 52 übertragen werden. Eine auf dem Fahrzeugsitz befindliche Bedienperson ist folglich diesen Bewegungen bzw. Vibrationen ausgesetzt. Der Fahrzeugsitz 52 ist über einen vorzugsweise gefederten Sockel 54 mit der Kabine 50 verbunden.

Zur Messung und Aufzeichnung von Bewegungen bzw. Vibrationen, denen eine sich auf den Fahrzeugsitz 52 befindliche Bedienperson ausgesetzt wird, ist die Konsole 34 in dem Sockel 54 oder im Bereich der Sitzschale des Fahrzeugsitzes 52 fest installiert. Die Konsole 34 ist mit den entsprechenden Datenübertragungsleitungen 40, 40' bzw. Stromversorgungsleitungen 42 des Arbeitsfahrzeugs 48 verbunden. Die Positionierung der Konsole 34 im Arbeitsfahrzeug ist beliebig und kann an jeder anderen Stelle innerhalb oder außerhalb der Kabine 50 vorgenommen werden, je nach dem, worauf die Bewegungs- bzw. Vibrationsmessungen ausgerichtet sein sollen. Durch die Festinstallation der Konsole 34 kann das Gerät 12 nun auf einfache Weise angeschlossen werden. Ferner ist es möglich verschiedene bzw. mehrere Arbeitsfahrzeuge 48, mit einer derartigen Konsole 34 zu versehen, so dass ein und dasselbe Gerät für die Messung von Bewegungen bzw. Vibrationen verwendet werden kann, ohne aufwändige Installationsarbeiten durchführen zu müssen.

Die Datenübertragungsleitungen 40, 40' sind vorzugsweise mit dem Bordcomputer oder einer elektrischen Steuereinheit (nicht gezeigt) verbunden, so dass ein Datentransfer zwischen Gerät 12 und Bordcomputer bzw. Steuereinheit bidirektional ermöglicht wird. Dadurch können Daten zur Messung und Aufzeichnung von Bewegungen bzw. Vibrationen auch auf einem Bildschirm bzw. Display des Arbeitsfahrzeugs 48 angezeigt werden oder Eingabedaten und Steuerdaten für das Gerät 12 über den Bordcomputer bzw. die Steuereinheit eingegeben werden. Dadurch, dass eine Verbindung des Geräts 12 mit dem Bordcomputer bzw. der Steuereinheit des Arbeitsfahrzeugs 48 hergestellt wird, sind auch Fernübertragungen möglich, sollte das Arbeitsfahrzeug 48 über eine entsprechende Ausrüstung zur Fernübertragung von Daten verfügen.

Das Gerät 12 ist mit einer Software versehen, welche vorzugsweise die Eingabe von mehreren personenspezifischen Daten speichert, so dass das Gerät 12 auch von verschiedenen Bedienpersonen einsetzbar ist.

Die Konsole 34 ist zudem auf einfache Weise nachrüstbar, sollte ein Arbeitsfahrzeug 48 nachträglich zur Messung und Aufzeichnung von Bewegungen bzw. Vibrationen mit einem erfindungsgemäßen System 10 versehen werden.

Dadurch, dass der Sensor 16 in dem Gehäuse 14 des Gerätes 12 angeordnet und damit nicht fest installiert ist, wird auch eine erforderliche Kalibrierung vereinfacht. Das Gerät 12 bzw. das Gehäuse 14 kann dazu aus der Konsole 34 entnommen werden und entsprechend einer Vorgabe für die Kalibrierung des Sensors 16 in die erforderlichen Positionen in Richtung der verschiedenen Raumachsen 18, 20, 22 gebracht werden, so dass die erforderliche Schwerkrafteinwirkung zur Kalibrierung des Geräts 12 bzw. des Sensors 16 richtungsbezogen erfolgen kann. Damit entfallen aufwändige Kalibriergeräte und -maßnahmen, die bei einem fest installierten Sensor, beispielsweise bei einem in dem Sitzpolster integrierten Sensor, erforderlich wären. Die Kalibrierung des Geräts 12 ist vorzugsweise durch eine entsprechende in dem Speicher des Geräts 12 abgespeicherte Prozedur anwenderfreundlich durchführbar.

Ferner kann auch durch entsprechende Software die Detektion eines Neigungswinkels des Fahrzeugssitzes 52 bzw. des Arbeitsfahrzeugs 48 erfolgen, da die Kalibrierung des Geräts 12 bzw. des Sensors 16 vom Fahrzeugsitz 52 entkoppelt durchführbar ist. Der Neigungswinkel kann dann bei der Durchführung der Messungen bzw. Aufzeichnungen entsprechend berücksichtigt und/oder kompensiert werden, so dass ein durch den Neigungswinkel des Fahrzeugssitzes 52 bzw. des Arbeitsfahrzeugs 48 hervorgerufener "Offset" berücksichtigt und gegebenenfalls korrigiert werden kann. Der Neigungswinkel am Fahrzeugsitz 48 kann beispielsweise durch schräges oder nicht aufrechtes Sitzen der Bedienperson hervorgerufen werden, weshalb eine Kalibrierung des Systems 10 von Vorteil ist, wenn diese bei einem vom Fahrzeugsitz 52 entkoppelten Sensor 16 erfolgen kann, so dass der Neigungswinkel ohne zusätzliches aufwändiges Equipment korrigierbar bzw. berücksichtigbar ist.

Das Gerät 12 ist mit einer Software bestückt, die nicht nur die momentanen Bewegungen bzw. Vibrationen sondern auch die Summe der Bewegungen und Vibrationen, die auf eine Bedienperson einwirken misst bzw. aufzeichnet. Dadurch wird ermöglicht, dass einer Bedienperson das Erreichen eines vorgebbaren Schwell- oder Grenzwertes signalisiert werden kann, sowohl visuell als auch akustisch. Ferner wird ermöglicht, dass eine verbleibende Betriebszeit in Bezug auf die bisher gemessene Vibrationsbelastung kalkulierbar bzw. anzeigbar ist. Personenspezifische Daten können dabei ebenfalls aufgezeichnet und registriert werden, so dass verschiedene Personen ihr eigenes Profil bezüglich ihrer Vibrationsbelastung aufrufen bzw. abspeichern können.

Auch wenn die Erfindung lediglich anhand eines Ausführungsbeispiels beschrieben wurde, erschließen sich für den Fachmann im Lichte der vorstehenden Beschreibung sowie der Zeichnungen viele verschiedenartige Alternativen, Modifikationen und Varianten, die unter die vorliegende Erfindung fallen.

## Patentansprüche

1. System (10) zur Messung und Aufzeichnung von Bewegungen in einem Arbeitsfahrzeug (48), insbesondere Vibrationen, umfassend ein Gerät (12) mit einem Gehäuse (14), einen Prozessor zur Verarbeitung von Daten, einen Speicher zur Speicherung von Daten, wenigstens eine Ausgabeeinrichtung zur Ausgabe von Daten, wenigstens eine Eingabeeinrichtung zur Eingabe von Daten und einen Sensor (16) zur Generierung von Bewegungssignalen, wobei die von dem Sensor (16) generierten Signale zur Messung und Aufzeichnung von Bewegungen in Form elektronischer und von dem Prozessor verarbeitbarer Bewegungsdaten herangezogen werden, **dadurch gekennzeichnet, dass** der Sensor (16) an oder in dem Gehäuse (14) angeordnet ist.

2. System nach Anspruch 1, **dadurch gekennzeichnet, dass** der Sensor (16) als Sensorchip ausgebildet ist, der vorzugsweise über eine Einsteckkarte an oder in dem Gehäuse (14) angeordnet ist.

3. System nach Anspruch 1 oder 2, **dadurch gekennzeichnet, dass** das Gerät (12) eine Anzeigeeinrichtung (30) aufweist.

4. System nach einem der vorhergehenden Ansprüche, **dadurch gekennzeichnet, dass** eine unabhängige Stromversorgung (28), vorzugsweise eine Batterie oder ein Akku, vorgesehen ist.

5. System nach einem der vorhergehenden Ansprüche, **dadurch gekennzeichnet, dass** eine Stromzuführeinrichtung (26) vorgesehen ist.

6. System nach einem der vorhergehenden Ansprüche, **dadurch gekennzeichnet, dass** eine Eingabeeinrichtung als Tastatur (32) ausgebildet ist.

7. System nach einem der vorhergehenden Ansprüche, **dadurch gekennzeichnet, dass** eine Eingabeeinrichtung als Steckverbindungsteil (24), insbesondere als Schnittstelle, oder als Datenlaufwerk ausgebildet ist.

8. System nach einem der vorhergehenden Ansprüche, **dadurch gekennzeichnet, dass** eine Ausgabeeinrichtung als Steckverbindungsteil (24'), insbesondere als Schnittstelle, oder als Datenlaufwerk ausgebildet ist.

9. System nach einem der vorhergehenden Ansprüche, **dadurch gekennzeichnet, dass** eine Konsole (34) vorgesehen ist, an die das Gehäuse (14) des Gerätes (12) befestigbar ist.

10. System nach Anspruch 9, **dadurch gekennzeichnet, dass** das Gehäuse (14) des Geräts (12) als Einschubmodul (15) und die Konsole (34) als Aufnahmefach (35) zur Aufnahme des Gehäuses (14) ausgebildet ist.

11. System nach Anspruch 9 oder 10, **dadurch gekennzeichnet, dass** die Konsole (34) wenigstens eine Ausgabeeinrichtung (44) und wenigstens eine Eingabeeinrichtung (44') aufweist, welche mit einer Eingabeeinrichtung (24) bzw. einer Ausgabeeinrichtung (24') des Gerätes (12) verbindbar sind.

12. System nach einem der Ansprüche 9 bis 11, **dadurch gekennzeichnet, dass** die Konsole (34) eine mit dem Gerät (12) verbindbare Stromversorgungseinrichtung (39, 46)aufweist.

13. Arbeitsfahrzeug (48), insbesondere landwirtschaftliches Fahrzeug, **dadurch gekennzeichnet, dass** ein System (10) gemäß einem der Ansprüche 1 bis 12 vorgesehen ist.

14. Arbeitsfahrzeug (48), insbesondere landwirtschaftliches Fahrzeug, **dadurch gekennzeichnet, dass** eine Konsole (34) gemäß einem der Ansprüche 9 bis 12 vorgesehen ist, wobei die Konsole (34) an dem Arbeitsfahrzeug (48) befestigt ist.

15. Arbeitsfahrzeug nach Anspruch 14, **dadurch gekennzeichnet, dass** die Konsole (34) mit einer elektronischen Steuereinheit des Arbeitsfahrzeugs (48) in Verbindung steht.

16. Arbeitsfahrzeug nach Anspruch 14 oder 15, **dadurch gekennzeichnet, dass** die Konsole (34) mit einer Stromquelle am Arbeitsfahrzeug (48) in Verbindung steht.

17. Arbeitsfahrzeug nach einem der Ansprüche 14 bis 16, **dadurch gekennzeichnet, dass** die Konsole (34) in einer Fahrzeugkabine (50) des Arbeitsfahrzeugs (48) angeordnet ist.

18. Arbeitsfahrzeug nach einem der Ansprüche 14 bis 17, **dadurch gekennzeichnet, dass** die Konsole (34) an einem Fahrzeugsitz (52) des Arbeitsfahrzeugs (48) angeordnet ist.
